# EUROPEAN PATENT APPLICATION

(11) **EP 2 777 958 A1**
(43) Date of publication of application: **17.09.2014**
(21) Application number: 14159089.3
(22) Date of filing: 12.03.2014
(51) Int. Cl.: B60C 23/04, B29D 30/00

(54) **An encasing for releasably containing a device and tire containing such encasing or encased device**

(30) Priority: 15.03.2013 US 201313835970
(71) Applicant: The Goodyear Tire & Rubber Company, Akron, Ohio 44316 (US)
(72) Inventor: Papakonstantopoulos, George Jim, Medina, OH Ohio 44256 (US); Gillick, James Gregory, Akron, OH Ohio 44313 (US); Hahn, Bruce Raymond, Hudson, OH Ohio 44210 (US)
(74) Representative: Kutsch, Bernd

(57) **Abstract**

An elastomeric encasement comprising a rubber patch (10) containing a cavity (11) to releasably hold a device (17) for use in assisting operation of a pneumatic tire (2) is disclosed. The cavity (11) is configured with an opening (13) to facilitate inserting the device (17) into and removing the device (17) from the cavity (11). The elastomeric encasement comprises an uncured or partially cured rubber composition. Also, an assembly comprising the elastomeric encasement and at least a portion of the device (17) within the cavity (11) is disclosed, as well as a pneumatic rubber tire (2) containing the elastomeric encasement or the assembly as a co-cured, integral, component of the tire (2).

## Description

### Field of the Invention

The present invention relates to an elastomeric encasing for releasably containing, by holding, a device, particularly for placement of a device in a tire, including, for example, a tire containing such encasing and tire containing such encasing which holds such device. The encasing, or holder, may comprise an elastomeric material or a combination of elastomeric material and rigid material. Such encasing, or holder, may comprise, for example, a pocketed enclosure, threaded channel, spring loaded bracket or twist and lock mechanism suitable for releasably holding a device. Such device may be, for example, a sensor, or sensor assembly, for sensing and transmitting information generated for or by a tire or any other device which may be used for facilitating an operation of the tire.

### Background of the Invention

Pneumatic rubber tires may sometimes be provided with one or more devices implanted in a portion of the tire. Such device may be, for example, a sensor to sense information relating to, for example, various properties and operating conditions of the tire. The sensed information may be transmitted by such sensor outside of the tire to a receiver. The receiver may be, for example, a control panel of the associated vehicle or an external receiving entity outside of both the tire and automobile. Further, such device may be, for example, a device which may be used for facilitating an operation of the tire.

Historically, a device may be affixed to a tire by imbedding it in, or securely cementing it to, a rubber component of the tire or in a rubber composition which is integral with a component of the tire. Therefore the device may be embedded within a tire component. Such tire component may be, for example, a tire's rubber innerliner layer or a tire's sidewall rubber layer. It is appreciated that such embedded device is difficult to remove from the tire, such as for example, for maintenance or replacement of the device, without damaging the tire itself.

Therefore it is desired to provide a means for placing a device on or in a pneumatic tire in a manner that the device may be removed for maintenance, replacement or other purpose without significantly damaging the tire itself.

In the description of this invention, the term "phr" where used herein, and according to conventional practice, refers to "parts of a respective material per 100 parts by weight of rubber, or elastomer".

The terms "rubber" and "elastomer" where used herein, may be used interchangeably, unless otherwise prescribed. The terms "rubber composition", "compounded rubber" and "rubber compound", where used herein, are used interchangeably to refer to "rubber which has been blended or mixed with various ingredients and materials" and such terms are well known to those having skill in the rubber mixing or rubber compounding art.

The term "carbon black" as used herein means "carbon blacks having properties typically used in the reinforcement of elastomers, particularly sulfur-curable elastomers", sometimes referred to as rubber reinforcing carbon blacks.

### Summary and Practice of the Invention

In accordance with this invention, an elastomeric encasing according to claim 1 is provided for releasably holding a device, as well as an assembly in accordance with claim 10 and a tire in accordance with claim 12.

Dependent claims refer to preferred embodiments of the invention.

In one embodiment, such encasing may comprise, for example, an elastomeric material or a combination of elastomeric material and rigid material.

In one embodiment, such encasing, or holder, may comprise for example, a pocketed enclosure, threaded channel, spring loaded bracket or twist and lock mechanism suitable for releasably holding a device.

In one embodiment, such device may be a device to facilitate an operation of the tire such as, for example, a sensor adapted to sense and transmit information generated by the a tire.

In further accordance with this invention, a pneumatic tire is provided having such encasing positioned on a surface of a rubber component of said tire.

In one embodiment, said tire component is a tire rubber innerliner and such encasing is mounted on said tire rubber innerliner within the internal cavity of the tire.

In one embodiment, a pneumatic tire is provided having said encasing positioned on a surface of a tire component to releasably hold and secure a device to the tire.

In one embodiment, for said pneumatic tire, said encasement is comprised of a rubber patch positioned on the surface of a rubber component of the tire where said patch comprises an elastomeric material or combination of elastomeric material and rigid material.

In one embodiment, for said tire, such encasing may comprise, for example, a pocketed enclosure, threaded channel, spring loaded bracket or twist and lock mechanism suitable for releasably holding the device.

In one embodiment said pneumatic tire is provided with a rubber component comprising a rubber innerliner layer, where said rubber innerliner layer contains a rubber patch thereon which is integral with said rubber innerliner layer, wherein said rubber patch contains an elastomeric, stretchable rubber cavity to releasably receive and securely hold a rigid device within its elastomeric cavity.

In one embodiment, for said pneumatic tire, said device is a sensor adapted to sense data for at least one physical property of said tire.

In one embodiment, for said pneumatic tire, said device is a device to aid in operation of the tire.

In one embodiment, for said tire, said elastomeric cavity within said patch is slightly smaller in at least one dimension than said device in a manner that upon insertion of the device into said cavity at least a portion of said cavity is necessarily stretched to accommodate receipt of the device within its cavity and the stretched portion of the cavity thereafter relaxed to press against said device and to thereby secure said device within its cavity. It is readily envisioned that the device is releasably contained (secured) within said cavity in a sense that a portion of the cavity may be stretched to enlarge the cavity to thereby accommodate removal of the sensor from the cavity.

In one embodiment, for said tire, said encasement comprises an uncured, or partially cured, rubber patch. In this manner then, for the pneumatic tire, as the uncured assembly of rubber components of the tire is cured, the said rubber patch is co-cured therewith and thereby made integral a rubber component of the tire. In one embodiment said tire component is a rubber tire innerliner layer and said cured rubber patch is co-cured with said tire innerliner and thereby integral with the tire innerliner layer.

In one embodiment, for said pneumatic tire, the encasement is of an elastomeric composition and is provided with a configuration comprising a cavity within said rubber patch with an opening in the cavity to facilitate inserting and releasably containing said device.

In one embodiment, for said pneumatic tire, said cavity of said elastomeric encasement comprises a pouch for holding said device and having an elastomeric opening for inserting said device into said pouch and for removing said device from said pouch.

In one embodiment, for said pneumatic tire, said cavity of said elastomeric encasement comprises an open cylinder having internal spiral grooves in its wall and said device in a circular shaped device containing external spiral ridges to facilitate inserting said device within and removing said device from said open cylindrical cavity by spirally threading said device inwardly into and spirally threading said device outwardly from said cylindrical cavity.

In one embodiment, said open cylinder contains a rigid cylindrical insert within said open cylinder which contains said internal spiral grooves in its wall adapted to receive the external spiral edges of said device.

In a further embodiment, for said pneumatic tire, said encasement contains said device.

In summary and to present a further description of embodiments of the invention:
In accordance with this invention, an elastomeric encasement is provided which comprises a rubber patch containing a cavity to releasably hold a device for use in assisting operation of a pneumatic tire, wherein said cavity is configured with an opening to facilitate inserting said device into and removing said device from said cavity and wherein said elastomeric encasement comprises an uncured or partially cured sulfur curable rubber composition.

The elastomeric encasement is further provided wherein said cavity comprises a pouch having an elastomeric opening for inserting said device into said pouch and for removing said device from said pouch.

In one embodiment the cavity is enclosed to form said pouch by a base rubber layer upon which the elastomeric encasement is mounted wherein the cavity contains said opening for inserting said device into said cavity and for removing said device from said cavity.

The elastomeric encasement is further provided where at least one dimension of said cavity is less than a corresponding dimension of said device to facilitate providing a secure fitting of said device within said cavity.

The elastomeric encasement is additionally provided wherein the cavity comprises an open cylinder wherein its wall contains spirally grooved threads to facilitate inserting said device into and removing said device from said cavity wherein said device has a circular cross-section and contains spirally grooved threads on its periphery which are complementary to (with) said spirally grooved threads of said cylinder and where spirally grooved threads of said cylinder are optionally comprising a rigid material. Said device is inserted and removed, for example, by engaging the spirally threaded cylinder walls and periphery of the device and twisting the devise to cause it to travel along the spiral threads of the cylinder.

The elastomeric encasement is also provided which contains a cylindrical opening which communicates with said cavity where said cylinder of said opening contains at least two spaced apart grooves (which might be referred to as being slots) recessed in its wall which extend the length of said open cylinder from its opening to the cavity of said elastomeric encasement, where said grooves are adapted to communicate with extended tangs contained on the periphery of said device where said tangs are configured to engage with said grooves to facilitate inserting and removing said device in and from said cavity of said elastomeric encasement through said cylindrical opening and, further, to secure said device within said cavity by twisting said device to cause its tangs contained within said cavity to thereby misalign with said grooves of said cylinder and where said cylinder optionally comprises a rigid material.

In one aspect, the elastomeric encasement is provided wherein said cavity is exclusive of an adhesive for holding said devise in said cavity.

In one aspect, the elastomeric encasement is provided wherein said cavity contains a non-permanent adhesive to releasably hold said device within said cavity.

An assembly is provided which comprises the elastomeric encasement containing at least a portion of said device within said cavity. In one aspect, the device comprises a combination of the device and base upon which the device is mounted.

In one aspect, the assembly is provided wherein said device is a rigid device comprising at least one of a sensor (for sensing data which might be generated by the tire both static data and, also as the tire is being used in service where the data may, if desired, be transmitted to as receiver for receiving the data), energy harvester (energy being generated by motion of the tire as it is being used in service to power the device) and controller (a device for controlling various functions or operational features of the tire).

The invention further contemplates a pneumatic rubber tire containing said elastomeric encasement as a co-cured, integral, component of said tire.

In further accordance with the invention a pneumatic rubber tire is provided containing said assembly as a co-cured, integral, component of a rubber innerliner of said tire.

### Drawings

Drawings are presented to further illustrate the invention. For the drawings, figures are provided to depict various configurations of the patch for releasably containing a device and placement on and within a tire.

### In the Drawings

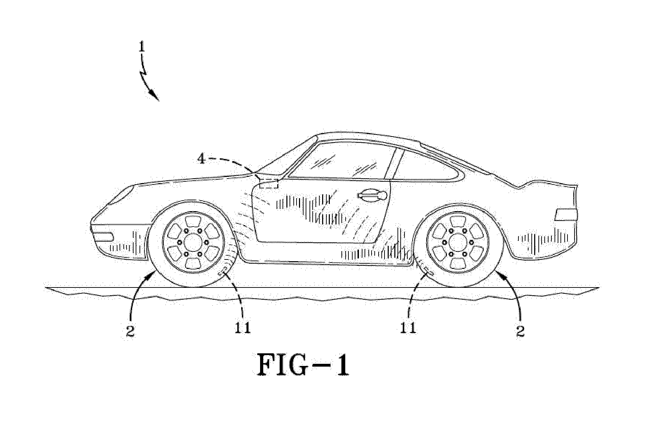

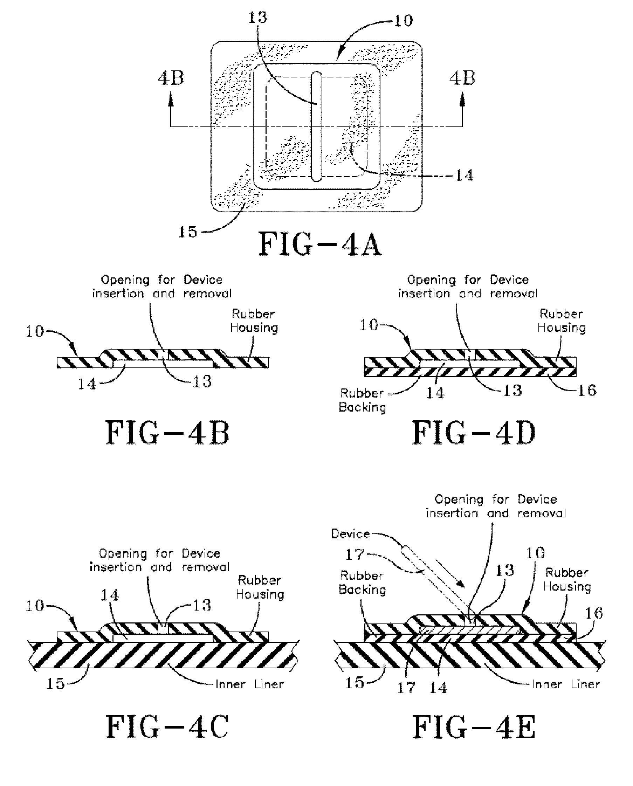

In the drawings, Figure 1 is presented to show a cross section of an automobile 1 with front and rear tires 2 with encasements mounted on an inner surface of the tires (e.g. innerliner of the tire) to facilitate releasably holding a device to aid in operating the tire. For example such device may be a sensor to provide signal(s) containing data which is transmitted to a receiver 4 outside of the tires 2 to, for example, a location within the automobile 1.

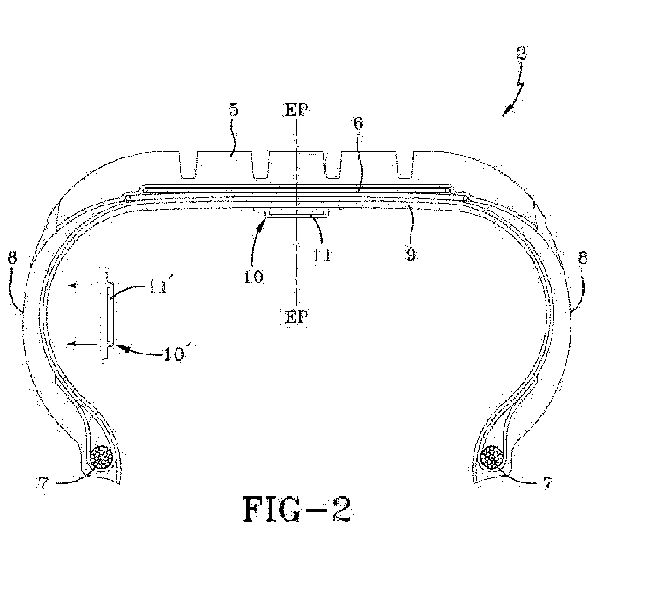

Figure 2 is presented to show a partial cross section of a pneumatic tire 2 composed of a tread 5, spaced apart bead portions 7 and connecting sidewalls 8. For the inner cavity of the pneumatic tire 2 a rubber innerliner 9 is provided having rubber patches 10 and 10' integrally adhered to and overlaying a portion of the innerliner 9 in the crown region and the sidewall region, respectively, of the tire 2. The rubber patches 10 and 10' are depicted with elastomeric (rubber) cavities 11 and 11', respectively configured slightly smaller than a rigid sensor (not shown) in order to receive and releasably contain and secure the rigid sensor by elastomeric pressure of the elastomer of the overlay cavities of the patches 11 and 11' against the sensor when positioned within the cavities 10 and 10'.

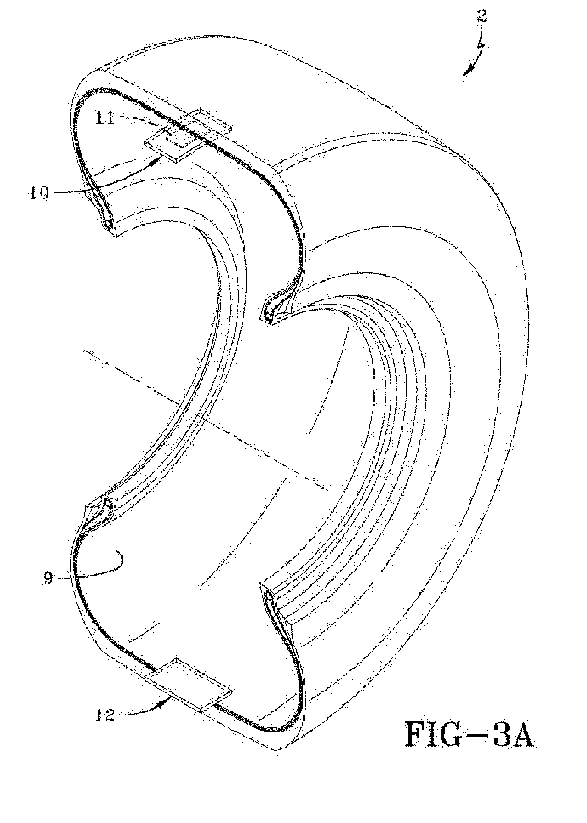

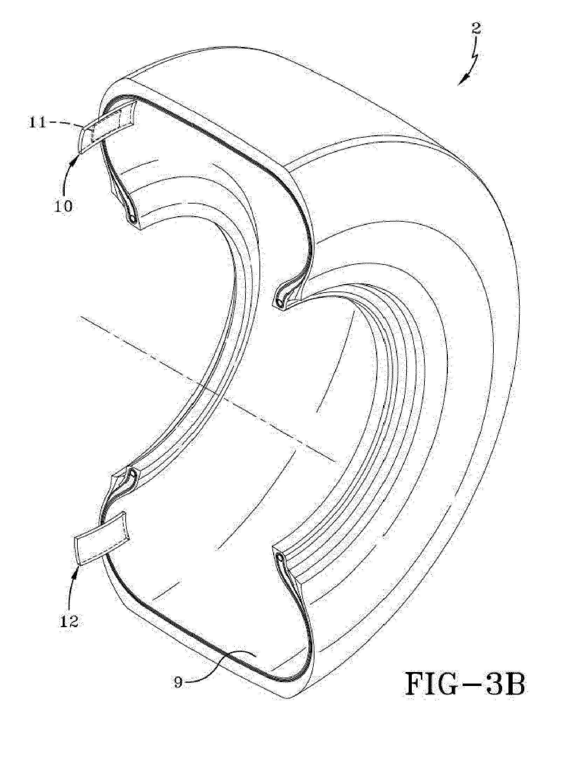

Figures 3A and 3B are presented to show a pneumatic tire containing two rubber patches disposed in a balanced fashion, or configuration, opposite of each other on the tire's innerliner in the crown region or on a sidewall portion of the tire.
   In particular, Figure 3A illustrates a perspective view of a partial cross section of the pneumatic tire 2 containing two rubber patches 10 and 12 integrally adhered to the tire innerliner 9 with each patch individually positioned in the crown region of the tire 2 on opposite sides of the tire 2 from each other in a weight balancing configuration. For this described configuration, one patch overlay 10 contains a cavity 11 for containing a device such as, for example, in a form of a sensor (not shown). The other patch overlay 12 is used to provide a weight balanced distribution of the patch overlays 10 and 12 and does not contain a cavity.
Figure 3B is similar to FIG 3A except that the rubber patches 10 and 12 are positioned in the sidewall region of the tire 2 on its innerliner 9 in a similarly weight balanced configuration with one patch 10 containing a cavity 11 for containing a device for example in a form of a sensor (not shown).
Figures 4A, B, C, D and E are presented to show an encasement in a form of a rubber patch which contains a cavity (e.g. an open or enclosed cavity) with an opening to insert or remove a device (e.g. a sensor) for which the encasement may be mounted on a base and/or tire innerliner.
   In particular, Figure 4A illustrates an overhead view of a combination of rubber patch 10 with an internal cavity 14 and longitudinal opening 13 for gaining access to the internal cavity 14 with the patch 10 being mounted on and adhered to a base or tire innerliner layer 15. FIGS 4B, 4C, 4D and 4E are views taken along sectioned 4B of FIG 4A.
FIG 4B illustrates a cross section of the patch 10 as a rubber housing with its open cavity 14, for releasably containing a device (not shown) and opening 13 for insertion and removal of the device.
FIG 4C illustrates the patch 10 mounted on and integrally adhered to a tire rubber innerliner layer 15 in a manner to complete a closure of the cavity 14 with its opening 13 for insertion and removal of a device (not shown).
FIG 4D illustrates the patch 10 as a rubber housing mounted on and adhered to a base rubber layer 16 as a rubber backing in a manner to complete a closure of the cavity 14 with its opening 13 for insertion and removal of a device (not shown).
FIG 4E illustrates the patch 10 as a rubber housing mounted on and adhered to a base layer 16 as a rubber backing in a manner to complete a closure of a cavity with its opening 13 and the assembly thereof further mounted on and its base rubber backing layer 16 and adhered to a tire rubber innerliner layer 15 where a device 17 is depicted as being inserted through opening 13 into and thereafter releasably contained and held in the cavity.

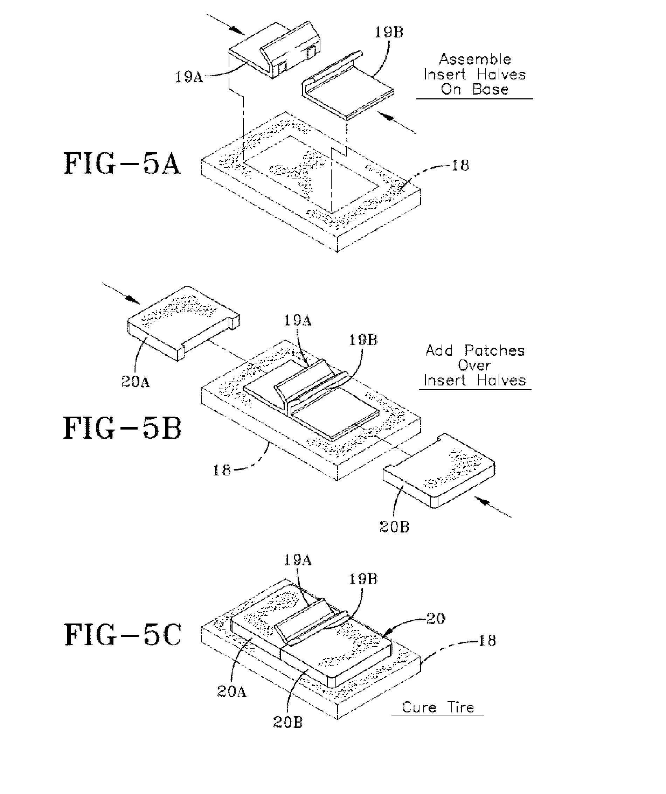

Figures 5 A, B and C are presented to illustrate a preparation of a rubber patch (20).
FIG 5A shows a base layer or rubber innerliner rubber layer 18 onto which mold halves 19A and 19B are positioned.
FIG 5B illustrates rubber pieces 20A and 20B bring placed over mold pieces 19A and 19B, respectively.
FIG 5C illustrates rubber pieces 20A and 20B being brought together with projections of mold pieces 19B and 19A therebetween being exposed and extending outwardly with the rubber pieces 20A and 20B being cured with the rubber base or tire innerliner layer 18 to form an integral portion of the tire.
FIG's 5D, 5E, 5F and 5G are presented to illustrate removal of the mold pieces and insertion of a device.

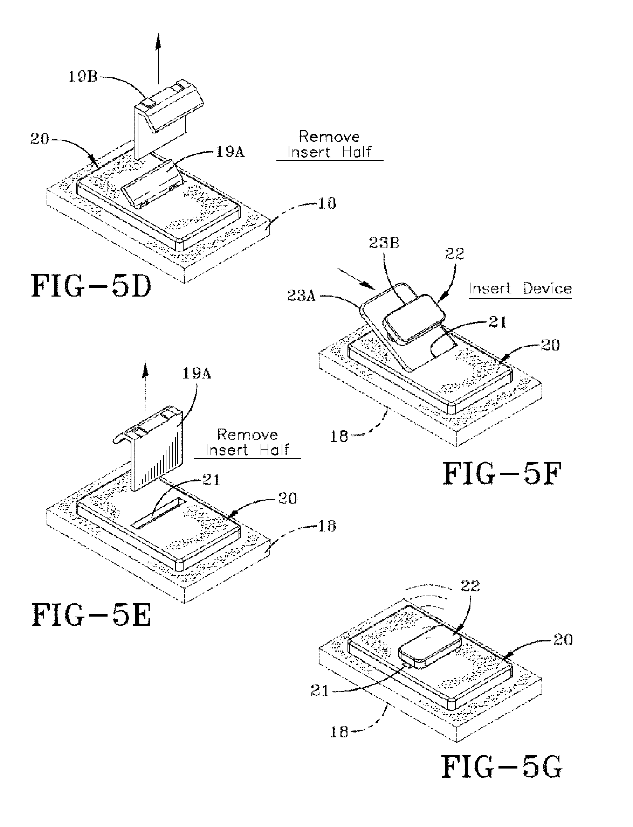

FIG 5D illustrates removal of mold piece 19A through an opening created by the mold pieces to form a cavity within the cured rubber patch 20 integrally cured to and with the rubber base or tire innerliner layer 18.
FIG 5E illustrates removal of mold piece 19B through an opening created by the mold pieces to form a cavity within the cured rubber patch 20 integrally cured to and with the rubber base or tire innerliner layer 18.
FIG 5F illustrates an insertion of a base portion 23A of a device assembly 22, with the device 23B contained on its base portion 23A, into an opening of a cavity 21 within the patch 29 contained on and integral with the rubber backing or tire inner rubber layer 18.
FIG 5G illustrates the device 22 mounted on with its base portion mounted within the cavity releasably contained within the cavity of the patch 20 mounted on and integral adhered to the rubber backing or tire innerliner rubber layer 18. FIG 5G also shows a high frequency signal being emitted from the device in a sense of the device being a sensor sending tire data to a remote receiver (not shown).

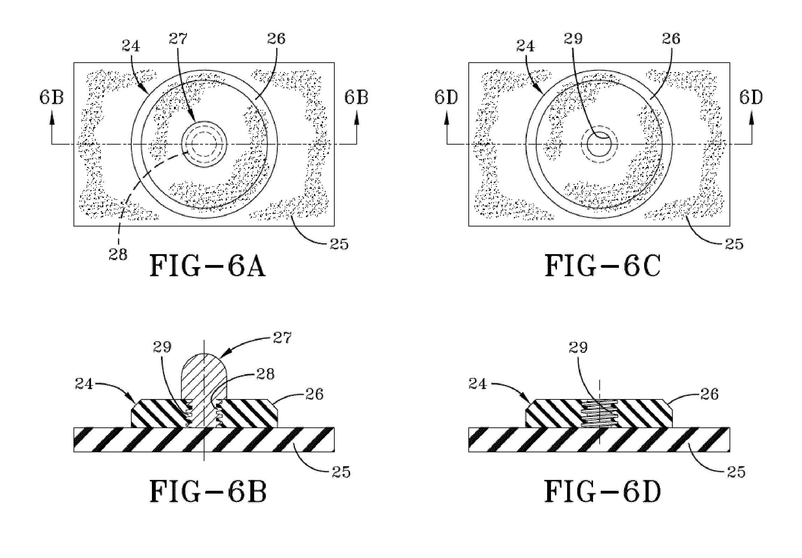

FIGs 6A, 6B, 6C and 6D are presented to show a rubber patch, and its preparation, containing a spirally threaded cavity (e.g. a spirally threaded channel) for receiving a device.
FIG 6A illustrates an overhead view of a patch assembly 24 composed of a patch 26 mounted on a rubber backing or tire innerliner rubber layer 25. The patch 26 contains a plug 27 to form a spirally threaded cavity in the patch where the plug 27 contains a spirally threaded wall 28 for molding a complementary spirally threaded wall in the cavity of the patch 26.
FIG 6B illustrates a vertical cross sectional view of a of the patch assembly 24 with the patch 26 mounted on a rubber base 25 together with the plug 27 with its spirally threaded wall 28 which forms a complementary spirally threaded wall 29 molded in the cavity of the patch 26.
FIG 6C illustrates an overhead view of the patch assembly 24 with the patch 26 and its supporting rubber base 25 from which the plug (27 in FIG 6B) has been removed to leave the spirally threaded wall 29 within cylindrical cavity of the patch 26.
FIG 6D illustrates a vertical cross sectional view of the patch assembly 24 with its patch 26 mounted on its supporting rubber base 25 the cylindrical cavity of the patch having its spirally threaded wall 29 for which a threaded device may be inserted (threaded) into or withdrawn from the device.

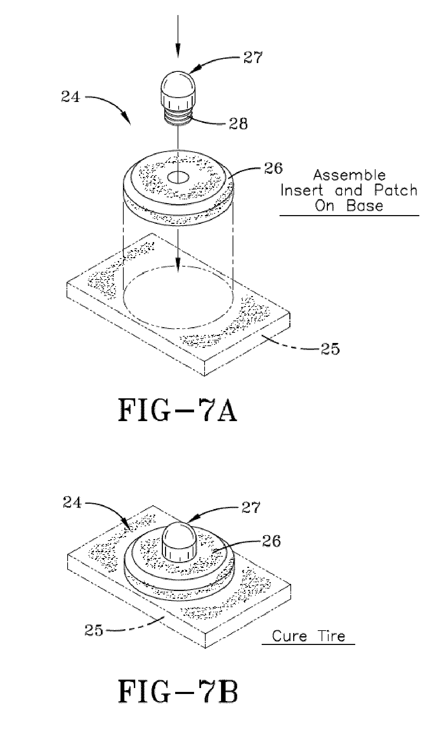

FIGs 7A and7B are presented to show an exploded view of the preparation sequence of FIG's 6A through 6D.
FIG 7A illustrates an assembly 24 with placement of the patch 26 with its smooth walled cylindrical cavity onto a rubber base or tire innerliner rubber layer 25 and with a plug, or insert 27 with a shaft containing a spirally threaded surface 28 to be inserted into the smooth walled cavity of the rubber patch 26.
FIG 7B illustrates an assembly 24 comprising the patch 26 on a rubber base or tire innerliner layer 25 and cured to form an integral assembly 24 containing the plug 27 which thereby forms a complementary spirally threaded surface (not shown) on the wall of the cylindrical cavity in the patch 26.

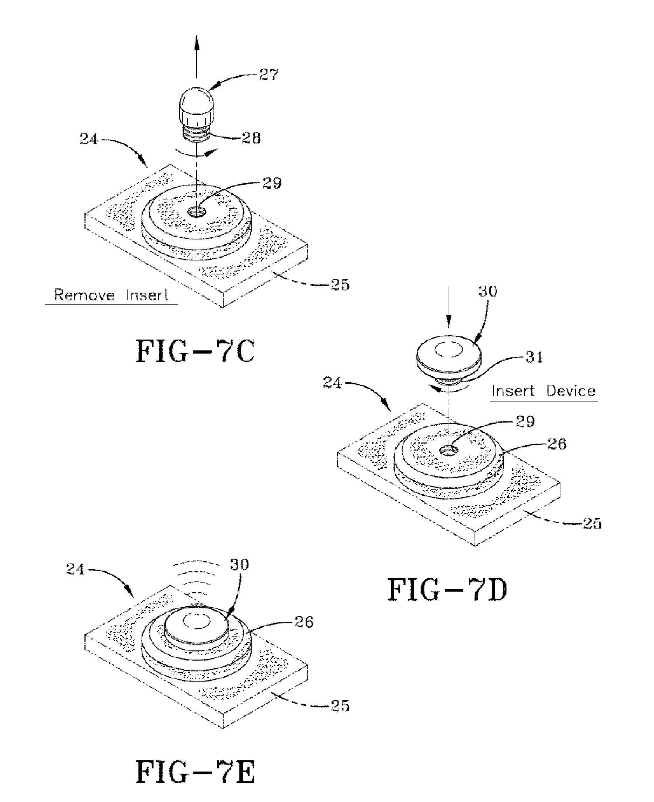

FIGs 7C, 7D and7E are presented to show an exploded view of removing a molding plug and inserting a device (e.g. sensor) in cylindrical cavity contained in a patch on a rubber base of tire innerliner rubber layer.
FIG 7C illustrates an assembly 24 with placement of the patch 26 on a rubber base or tire innerliner rubber layer 25 as shown in previous FIG 7B now with its plug 27 with its spirally threaded shaft 28 being removed to reveal the complementary spirally threaded wall 29 of the cylindrical cavity formed by the spirally threaded shaft 28 on the plug 27.
FIG 7D illustrates an assembly 24 of the patch 26 mounted on a rubber base 25 with a device 30 which includes a spirally threaded shaft 31 positioned to be spirally threaded (inserted) into the of the patch 26 with its complementary spirally treaded wall 29 for which a threaded device may be inserted (threaded) into or removed from the cavity.
FIG 7E illustrates the assembly 24 of the patch 26 mounted on its rubber base 25 with the device being threaded into the spirally threaded cavity of the patch 26 with a portion of the device 30 being exposed and depicted as radiating a high frequency signal to transmit tire data to a remote receiver (not shown).

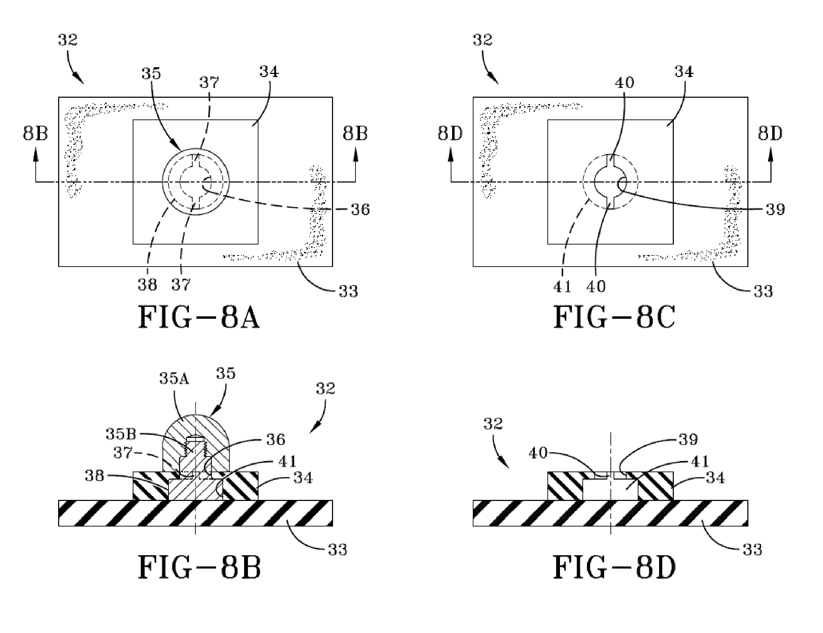

FIGs 8A, 8B, 8C and 8D are presented to show preparation of a cavity in a patch on a rubber base or tire innerliner rubber layer which contains a slotted opening for the cavity to thereby create a twist-and-lock operation of mechanism for inserting (and removing) a device from a patch cavity.
FIG 8A illustrates a1 top view of an assembly 32 of a rubber patch 34 mounted on a rubber base or tire innerliner rubber layer 33 which contains a molding plug (35B in FIG 8B) with its surface 38 shown by a dashed line and having two opposing tangs 37 protruding from a small shaft 36 of the plug to form slots, or grooves (40 shown in FIG 8C) in the opening to the cavity of the patch 34.
FIG 8B illustrates a vertical cross sectional view of the patch 34 mounted on a rubber base 33 with the plug assembly 35 composed of a mold plug 35B and threaded plug cap 35A. The surface 38 of the plug 35A is to define the cavity within the patch 34 and the tangs 37 protruding from the shaft 36 are to define slots, or grooves (40 shown in FIG 8C).
FIG 8C illustrates a top view of the assembly 32 after partially curing, composed of the patch 34 and its rubber base 33 with the molding plug (not shown) removed to reveal the opening to the cylindrical cavity 41 of the rubber patch 34 with the molded two opposing slots, or grooves 40.
FIG 8D illustrates a vertical cross sectional view of the patch 34 with rubber base 33, internal cavity 41, slots 40 and small opening 39 through which the device may be inserted into or withdrawn from the internal cavity 41 of the patch 34.

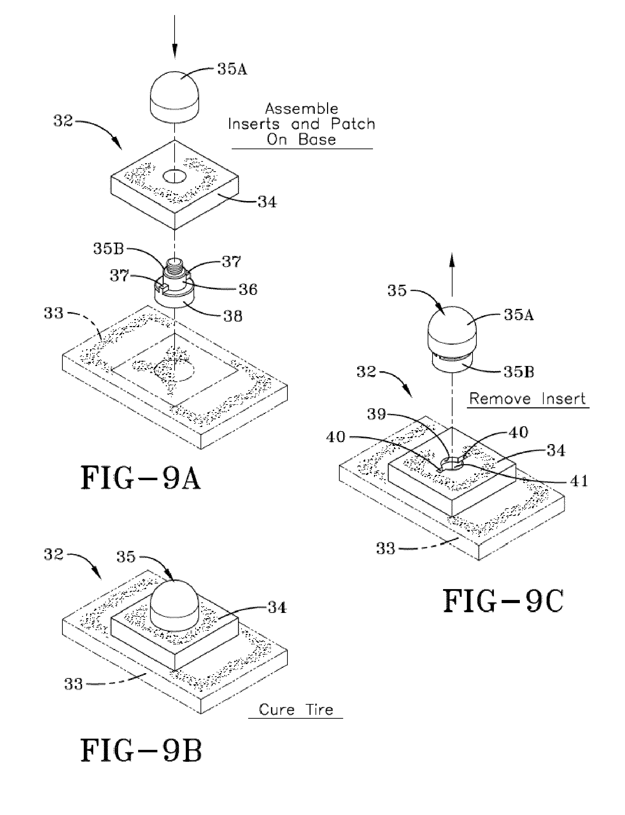

FIGs 9A, 9B and 9C are presented to illustrate an exploded view of the preparation sequence of FIGs 8A through 8D.
FIG 9A illustrates an assembly 32 with its patch 34 and rubber base 33 with placement of the patch 34 with its smooth walled cylindrical cavity onto the rubber base or tire innerliner rubber layer 33 and with the molding plug 35B containing the tangs 37 on either side of a shaft 36 of the plug 35B and surface 38 to define a cavity within the patch 34 together with a spirally threaded outer extension of the plug 35B to receive the internally threaded plug cap 35A.
FIG 9B illustrates the assembly 32 comprised of the patch 34 on the rubber base 33 where the cap of the plug assembly 35 can be seen and which caps the aforesaid plug 35A which is beneath the plug cap and therefore not seen in this FIG 9B.
FIG 9C illustrates the assembly 32 of the rubber patch 34 and rubber base 33 and mold assembly 35 with the with the plug, or insert, (not shown) removed as well as its outer plug cap 35A with its threaded shaft 35B also being removed to reveal the small opening 39 to the cavity 41 with the two opposing slots 40.

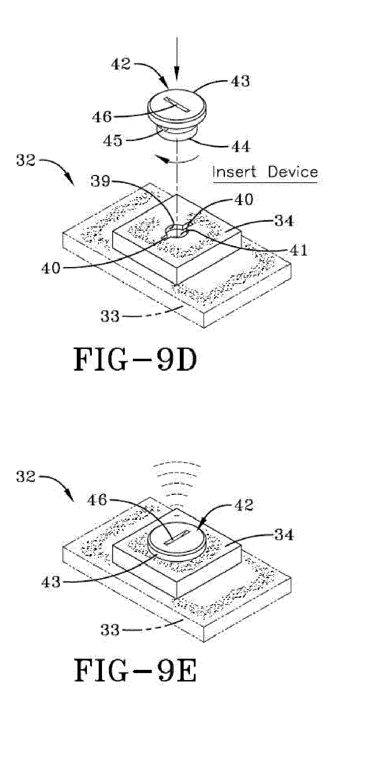

FIGs 9D and 9E are presented to show an exploded view of inserting of a device (e.g. sensor) in the cylindrical cavity with its slotted opening contained in a patch on a rubber base of tire innerliner rubber layer.
FIG 9D illustrates the assembly 32 of the rubber patch 32 on its rubber base 33 with its small opening 39 to its internal cavity 41 for which the small opening 39 contains opposing slots 40. A device assembly 42 is shown as a device containing an upper portion 43 and lower portion 44. The upper portion 43 contains an indented slot 46 and the lower portion contains a shaft with two opposing tangs 45 to engage slots 40.
FIG 9E illustrates the assembly 32 with the rubber patch 34 mounted on a rubber base 33 with the device assembly 42 inserted into the cavity of the patch to cause its protruding tangs to engage the slots of the patch and thereby extend entirely through the small opening into the cavity 41 of the patch and the indented slot 46 in the upper portion 43 of the device assembly 42 used to turn the device assembly 90 degrees to thereby twist and removably locking the device assembly 42 to the cavity 41 and thereby to the patch 34, by its protruding tangs contained within in the cavity 41 of the patch 34.

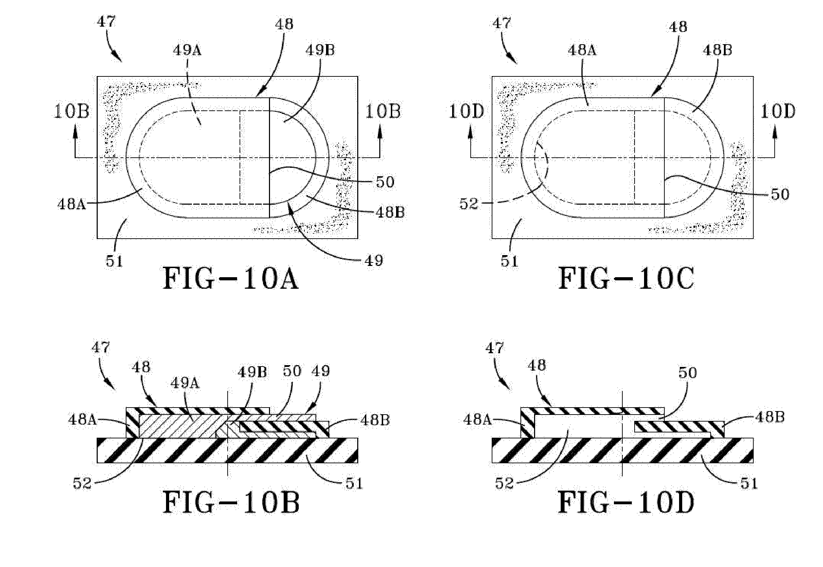

FIGs 10A and 10B are presented to show an example of a variation of the encasement presented in FIGs 4A, 4B, 4C and 4D, with FIG 10C presented to illustrate the encasement with mold pieces contained in the encasement. The encasement is a two-piece (or two-sectioned) encasement in a form of a rubber patch which contains a cavity (e.g. which can be an open or enclosed cavity) for releasably holding a device and having an opening to insert or remove a device (e.g. a sensor) for which the encasement may be mounted on a rubber base and/or a tire innerliner rubber layer.
   In particular, Figure 10A illustrates a an overhead view of rubber patch 49 comprised of a an encasement 48 with overlapping shells 48B and 48A which communicate with the peripheral side of the encasement 48 where said overlapping shells are comprised of an inner first shell 48A and a second outer shell 48B to define a an internal cavity 50 between said shells for releasably holding a device (e.g. holding a sensor) wherein the second outer shell 48B is an overlapping relationship with the first inner shell 48A to define an opening 50 between the overlapping portion of the shells 48A and 48B which extends to the internal cavity 52 to permit insertion and removal of a device into and out from the internal cavity 52 of the encasement 48. The encasement (48) is mounted on a base 51 composed of a base rubber layer or tire innerliner rubber layer to effect a closure of the internal cavity 52 beneath the shells 48A and 48B.
FIG 10B is a side elevational view taken along section lines 10B-10B of FIG 10A.
FIG 10B shows a cross section of the rubber patch 49 as a two piece rubber housing with its internal cavity 52, for releasably containing a device (not shown), defined by the aforesaid first inner shell 48B and overlapping outer second shell 48A with the opening 50 therebetween which extends through the overlapping portion of shells 48A and 48B into the internal cavity 52 for permitting insertion and removal of a device (e.g. sensor). A rubber base rubber layer 51, in a form of a rubber base or tire innerliner rubber layer, is shown to effect a closure of the internal cavity 52 beneath said shells 48A and 48B.
FIG 10C shows a cross section of the rubber patch 49 which contains mold pieces 48A and 48B contained in the encasement cavity and which are to be removed upon its completion (e.g. by partially curing the rubber patch, or encasement).

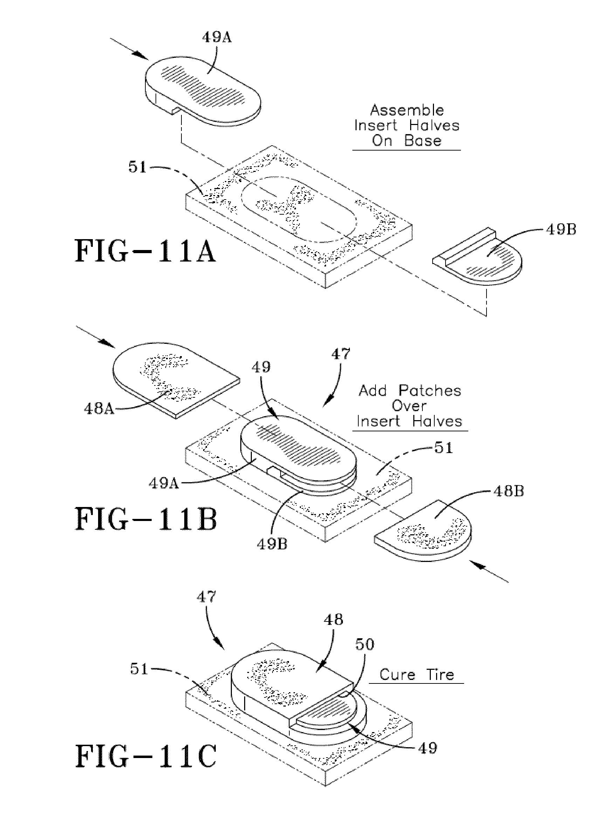

FIGs 11A, 11B and 11C are presented to illustrate a preparation of a rubber patch (or encasement with its cavity) 49.
FIG 11A shows a rubber base layer or rubber innerliner rubber layer 51 onto which rubber patch halves 49A and 49B are assembled.
FIG 11B shows rubber patch halves 49A and 49B assembled on the rubber base layer 51 together with mold pieces 48A and 48B which are used to establish the cavity within the encasement, or rubber patch. The assembly is identified as item 47.
FIG 11C shows the assembly 47 positioned on rubber base layer (or rubber innerliner layer) to be cured with (therefore to become integral with) the tire in a suitable mold at an elevated temperature.

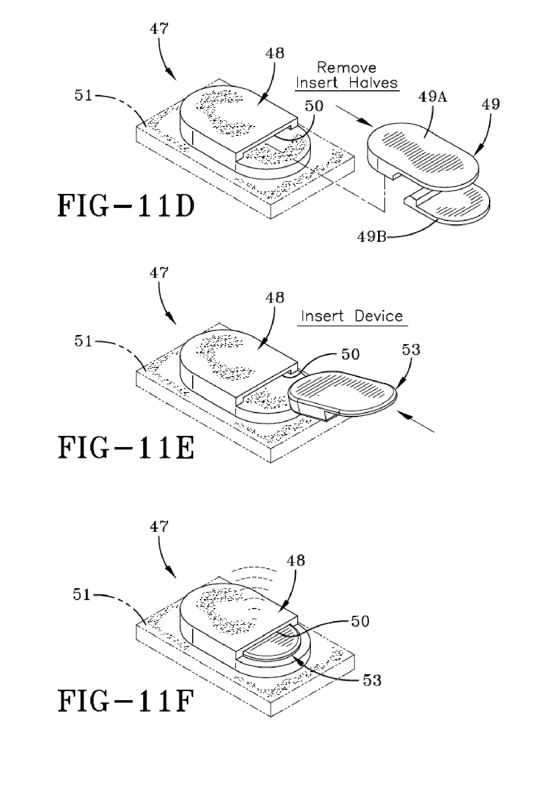

FIGs 11D, 11E, and 11F are presented to illustrate removal of the mold pieces and insertion of a device.
FIG 11D shows removal of the mold 49 in a form of mold insert pieces 48A and 48B which are referred to in the drawing as "Remove insert halves" through the opening 50 created by the mold pieces to form a cavity within the cured rubber patch, or encasement. The rubber patch, or encasement 47 is partially cured to make the encasement 47 integral with the rubber base or tire innerliner layer 51.
FIG 11E shows an insertion of a device 53 through opening 50 into the cavity within the rubber patch, or encasement.
FIG 11F illustrates the device 53 being held by the rubber patch, or encasement mounted on and integrally adhered to the rubber backing or tire innerliner rubber layer 51.
FIG 11F further shows a high frequency signal being emitted from the device in a sense of the device being a sensor sending tire data to a remote receiver (not shown).

## Claims

1. An elastomeric encasement comprising a rubber patch (10) containing a cavity (11) to releasably hold a device (17) for use in assisting operation of a pneumatic tire (2), wherein said cavity (11) is configured with an opening (13) to facilitate inserting said device (17) into and removing said device (17) from said cavity (11) and wherein said elastomeric encasement comprises an uncured or partially cured rubber composition.

2. The elastomeric encasement of claim 1, wherein said cavity (11) comprises a pouch having an elastomeric opening for inserting said device (17) into said pouch and for removing said device from said pouch.

3. The elastomeric encasement of claim 2, wherein said cavity (11) is enclosed to form said pouch by a base rubber layer (16) upon which the elastomeric encasement is mounted, and wherein the cavity (11) contains said opening (13) for inserting said device (17) into said cavity (11) and for removing said device (17) from said cavity (11).

4. The elastomeric encasement of at least one of the previous claims, wherein at least one dimension of said cavity (11) is less than a corresponding dimension of said device (17) to facilitate providing a secure fitting of said device within said cavity.

5. The elastomeric encasement of at least one of the previous claims, wherein the cavity (11) comprises an open cylinder, wherein its wall contains spirally grooved threads to facilitate inserting said device (17) into and removing said device from said cavity (11), wherein said device (17) has a circular cross-section and contains spirally grooved threads on its periphery which are complementary to said spirally grooved threads of said cylinder, the spirally grooved threads of said cylinder optionally comprising a rigid material.

6. The elastomeric encasement of at least one of the previous claims comprising a cylindrical opening which communicates with said cavity (11), wherein said cylinder of said opening contains at least two spaced apart grooves recessed in its wall which extend the length of said open cylinder from its opening to the cavity (11) of said elastomeric encasement, wherein said grooves are adapted to communicate with extended tangs contained on the periphery of said device (17), wherein said tangs are configured to engage with said grooves to facilitate inserting and removing said device (17) in and from said cavity (11) of said elastomeric encasement through said cylindrical opening and, further, to secure said device within said cavity by twisting said device to cause its tangs contained within said cavity (11) to thereby misalign with said grooves of said cylinder, and wherein said cylinder optionally comprises a rigid material.

7. The elastomeric encasement of at least one of the previous claims, wherein said cavity (11) is exclusive of an adhesive for holding said devise (17) in said cavity (11).

8. The elastomeric encasement of at least one of the previous claims 1 to 6, wherein said cavity (11) contains a non-permanent adhesive to releasably hold said device (17) within said cavity (11)..

9. The elastomeric encasement of at least one of the previous claims, wherein the uncured or partially cured rubber composition is a sulfur curable uncured or partially cured rubber composition.

10. An assembly comprising the elastomeric encasement according to at least one of the previous claims and further comprising at least a portion of said device (17) within said cavity (11), wherein said device (17) optionally comprises a combination of the device (17) and a base (16) upon which the device (17) is mounted.

11. The assembly of claim 10, wherein said device (17) is a rigid device comprising at least one of a sensor, energy harvester and controller.

12. A pneumatic rubber tire containing said elastomeric encasement according to at least one of the claims 1 to 9 or the assembly according to claim 10 or 11 as a co-cured, integral, component of said tire (2).

13. The pneumatic tire of claims 12, wherein the component is a rubber innerliner (9) of the tire (2).
